# EUROPÄISCHE PATENTSCHRIFT

(11) **EP 0 621 834 B1**
(45) Veröffentlichungstag und Bekanntmachung des Hinweises auf die Patenterteilung: **11.10.1995**
(21) Anmeldenummer: 92902906.4
(22) Anmeldetag: 23.01.1992
(51) Int. Cl.: B60S 3/04

(54) **VERFAHREN UND VORRICHTUNG ZUR REINIGUNG VON KRAFTFAHRZEUGEN**
PROCESS AND DEVICE FOR CLEANING MOTOR VEHICLES
PROCEDE ET DISPOSITIF DE NETTOYAGE DE VEHICULES A MOTEUR

(43) Veröffentlichungstag der Anmeldung: 02.11.1994
(73) Patentinhaber: Alfred Kärcher GmbH & Co., 71364 Winnenden (DE)
(72) Erfinder: FIGEL, Wilfried, D-7158 Sulzbach/Murr (DE); BUTSCH, Erwin, D-7057 Winnenden 5 (DE)
(74) Vertreter: Böhme, Ulrich Hoeger, Stellrecht & Partner
(86) Internationale Anmeldenummer: EP9200137
(87) Internationale Veröffentlichungsnummer: WO9314959

(56) Entgegenhaltungen:
- EP-A- 0 379 353
- DE-A- 2 320 925
- DE-A- 3 723 978
- US-A- 5 016 662

## Beschreibung

Die Erfindung betrifft ein Verfahren zur Reinigung von Kraftfahrzeugen, bei dem man auf die zu reinigende Fläche eine Reinigungschemikalie aufbringt und anschließend eine Reinigungsflüssigkeit in Form eines Hochdruckstrahles gegen die zu reinigende Fläche richtet und durch Relativbewegung des Kraftfahrzeuges und des Hochdruckstrahles die gesamte zu reinigende Fläche mit dem Hochdruckstrahl überstreicht (siche z.B. US-A-5 016 662).

Ferner betrifft die Erfindung eine Vorrichtung zur Reinigung von Kraftfahrzeugen, die besonders geeignet ist zur Durchführung des genannten Verfahrens, mit Düsen zur Abgabe eines Hochdruckreinigungsstrahles.

Reinigungsanlagen für Kraftfahrzeuge arbeiten üblicherweise mit Bürsten, die mechanisch die zu reinigenden Flächen überstreichen.

Daneben sind auch Reinigungsanlagen bekannt geworden, die auf den Einsatz von Bürsten verzichten und statt dessen die zu reinigende Fläche mit kompakten Hochdruckstrahlen beaufschlagen, die beim Aufprall auf die zu reinigende Fläche aufgrund der hohen kinetischen Energie eine sehr günstige Reinigungswirkung erzielen.

Um die Reinigungswirkung zu erhöhen, ist es üblich, die zu reinigende Fläche vor der Beaufschlagung mit dem Hochdruckreinigungsstrahl mit einer Reinigungschemikalie zu besprühen, die dann beim Auftreffen des Hochdruckreinigungsstrahles ihre volle Reinigungswirkung entfalten kann.

Bei bekannten Reinigungsanlagen dieser Art hat sich dabei das Problem ergeben, daß durch den auf die zu reinigende Fläche gerichteten Hochdruckreinigungsstrahl in einer größeren Umgebung von der Aufprallstelle die Reinigungschemikalie weggespült wird, so daß beim Auftreffen des kompakten Reinigungsstrahles zumindest ein ganz erheblicher Teil der vorher aufgetragenen Reinigungschemikalie bereits entfernt ist. Um für die Reinigung noch genügend Reinigungschemikalie an der Aufprallstelle zur Verfügung zu stellen, muß daher eine sehr große Chemikalienmenge aufgetragen werden.

Es ist Aufgabe der Erfindung, ein gattungsgemäßes Verfahren sowie eine Vorrichtung zur Reinigung von Kraftfahrzeugen so auszugestalten, daß die aufgetragene Menge der Reinigungschemikalie reduziert werden kann, ohne daß beim eigentlichen Reinigungsvorgang mittels des Hochdruckstrahles eine verminderte Reinigungswirkung eintritt.

Diese Aufgabe wird bei einem Verfahren der eingangs beschriebenen Art erfindungsgemäß dadurch gelöst, daß man den Hochdruckstrahl in einer Ebene gegen die zu reinigende Fläche richtet, die mit der noch nicht vom Hochdruckstrahl beaufschlagten Fläche einen spitzen Winkel einschließt. Im Gegensatz zur bisherigen Übung richtet man also den kompakten Reinigungsstrahl weder senkrecht auf die zu reinigende Fläche noch schräg gegen die zu reinigende Fläche, sondern man neigt den Hochdruckstrahl so, daß der aus der Düse austretende Hochdruckstrahl eine Komponente in Richtung der bereits vorher vom Hochdruckstrahl überstrichenen Fläche erhält. Wenn die Hochdruckdüse längs eines stehenden Fahrzeuges bewegt wird, heißt dies mit anderen Worten, daß der austretende Strahl eine Komponente entgegen der Bewegungsrichtung des Hochdruckstrahles erhält, wenn dagegen das Fahrzeug relativ zur Hochdruckdüse bewegt wird, bedeutet dies, daß der aus der Düse austretende Strahl eine Komponente in Fahrzeugbewegungsrichtung erhält. Es hat sich herausgestellt, daß durch diese Neigung des Hochdruckstrahles die Abtragwirkung des Hochdruckstrahles für die aufgetragene Reinigungschemikalie auf die Bereiche begrenzt wird, die bereits vom Hochdruckreinigungsstrahl überstrichen und gereinigt sind, dagegen bleibt der Teil der Fläche, der bisher noch nicht von dem Hochdruckstrahl erreicht worden ist, weitgehend unbeeinflußt. Die aus der Hochdruckdüse austretenden Partikel der Reinigungsflüssigkeit werden aufgrund der Komponente in Richtung auf die bereits gereinigten Flächenbereiche von der Grenzlinie zwischen noch mit Reinigungschemikalie beschichteten und ungereinigten Bereichen einerseits und bereits abgereinigten Bereichen andererseits in die bereits abgereinigten Bereiche gerichtet und können daher nicht sozusagen vorauseilend die Reinigungschemikalie von den noch nicht gereinigten Flächenbereichen entfernen.

Es ist dabei vorteilhaft, wenn der Winkel der Ebene des Hochdruckreinigungsstrahls gegenüber der zu reinigenden Fläche zwischen 10° und 60° liegt.

Eine flächenmäßige Überstreichung läßt sich erreichen, wenn man einen in der Ebene aufgefächerten, quer dazu jedoch kompakten Strahl verwendet. Ein solcher Strahl erfaßt zwar quer zur Vorschubrichtung größere Bereiche, trotzdem werden alle Flüssigkeitsteilchen in der genannten Weise mit einer Komponente in Richtung auf die bereits abgereinigten Bereiche abgegeben.

Die Aufgabe wird bei einer Vorrichtung der eingangs beschriebenen Art erfindungsgemäß dadurch gelöst, daß die Austrittsachse der Düsen eine Komponente in Richtung auf bereits vom Hochdruckreinigungsstrahl beaufschlagte Bereiche der zu reinigenden Fläche aufweist.

Die nachfolgende Beschreibung bevorzugter Ausführungsform der Erfindung dient im Zusammenhang mit der Zeichnung der näheren Erläuterung.
- Fig. 1: zeigt eine schematische Seitenansicht einer Hochdruckdüse mit einem aus ihr auf eine mit Reinigungschemie vorbehandelte Fläche abgegegeben Hochdruckreinigungsflüssigkeitsstrahl und
- Fig. 2: eine Draufsicht auf die Anordnung der Figur 1.

Eine zu reinigende Fläche 1 eines Kraftfahrzeuges oder eines anderen Gegenstandes, beispielsweise eine Kühlerhaube, wird vor der eigentlichen Reinigung mit einer Reinigungschemikalie besprüht, so daß auf dieser Fläche 1 eine Schicht 2 dieser Reinigungschemikalie haftet.

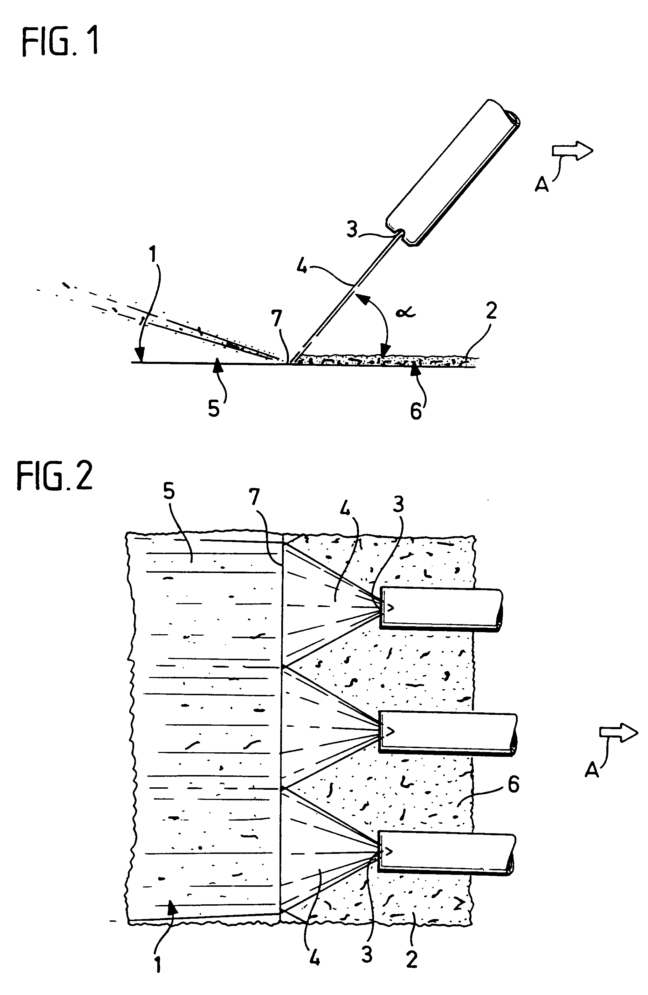

Zur eigentlichen Reinigung wird über eine Hochdruckdüse 3 ein Strahl 4 einer Reinigungsflüssigkeit abgegeben. Diese Reinigungsflüssigkeit kann beispielsweise Wasser sein, das unter hohem Druck abgegeben wird, z.B. unter einem Druck zwischen 80 und 120 bar. Der Strahl 4 wird dabei in einer Ebene abgegeben, die mit der Fläche 1 einen spitzen Winkel α einschließt, und zwar derart, daß der Strahl 4 eine Komponente in Richtung auf die Bereiche 5 erhält, die bereits gereinigt sind. Dies läßt sich auch in anderen Worten so definieren, daß bei einer Bewegung der Hochdruckdüse 3 in Richtung des Pfeiles A in Figur 1 relativ zur Fläche 1 der Strahl eine Komponente entgegen der Richtung des Pfeiles A erhält.

Dabei kann der Strahl 4, wie sich aus Figur 2 ergibt, quer zu der genannten Ebene aufgefächert sein, so daß er im Auftreffen auf die Fläche 1 einen breiten Streifen beaufschlagt, senkrecht zu der genannten Fläche 1 bleibt der Strahl jedoch durch entsprechende Ausbildung der Düse 3 kompakt und nicht aufgefächert.

Die genannte Neigung des Strahles 4 gegenüber der Fläche 1 führt dazu, daß praktisch alle Flüssigkeitsteilchen des Strahles 4 in Richtung auf den bereits gereinigten Bereich 5 umgelenkt werden, d.h. Schmutzteilchen und Teilchen der Reinigungschemie-Schicht 2 werden nur in Richtung auf die bereits gereinigten Bereiche 5 weggeschwemmt, in den noch nicht beaufschlagten Bereichen 6 der Fläche 1 hingegen bleibt die Schicht 2 praktisch unversehrt, da die Teilchen des Strahles 4 aufgrund der Komponente in Richtung auf den Bereich 5 nicht in den Bereich 6 einströmen können. Dadurch ist gewährleistet, daß im Auftreffpunkt 7 nach wie vor die gesamte Reinigungsmittelschicht 2 zur Verfügung steht, vorzeitige Verluste sind nicht zu befürchten. Um eine zuverlässige und einwandfreie Reinigung zu erzielen, ist es also nicht notwendig, Reinigungschemikalie im Überschuß aufzubringen.

## Patentansprüche

1. Verfahren zur Reinigung von Kraftfahrzeugen, bei dem man auf die zu reinigende Fläche (1) eine Reinigungschemikalie aufbringt und anschließend eine Reinigungsflüssigkeit in Form eines Hochdruckstrahls (4) gegen die zu reinigende Fläche (1) richtet und durch Relativbewegung des Kraftfahrzeuges und des Hochdruckstrahles (4) die gesamte zu reinigende Fläche (1) mit dem Hochdruckstrahl (4) überstreicht,
**dadurch gekennzeichnet,**
daß man den Hochdruckstrahl (4) in einer Ebene gegen die zu reinigende Fläche (1) richtet, die mit der noch nicht vom Hochdruckstrahl (4) beaufschlagten Fläche (6) einen spitzen Winkel einschließt.

2. Verfahren nach Anspruch 1, dadurch gekennzeichnet, daß der Winkel der Ebene gegenüber der zu reinigenden Fläche (1) zwischen 10° und 60° liegt.

3. Verfahren nach einem der voranstehenden Ansprüche, dadurch gekennzeichnet, daß man einen in der Ebene aufgefächerten, quer dazu jedoch kompakten Strahl (4) verwendet.

4. Vorrichtung zur Reinigung von Kraftfahrzeugen gemäß den Verfahren des Patentanspruches 1, mit Düsen (3) zur Abgabe eines Hochdruck-Reinigungsstrahles (4), dadurch gekennzeichnet, daß die Austrittsachse der Düsen (3) eine Komponente in Richtung auf bereits vom Hochdruck-Reinigungsstrahl (4) beaufschlagte Bereiche (5) der zur reinigenden Fläche (1) aufweist.

## Claims

1. Process for cleaning motor vehicles, wherein a cleaning chemical is applied to the surface (1) to be cleaned and subsequently a cleaning liquid in the form of a high pressure jet (4) is directed against the surface (1) to be cleaned and by relative movement of the motor vehicle and the high pressure jet (4) the entire surface (1) to be cleaned is covered by the high pressure jet (4), characterized in that the high pressure jet (4) is directed against the surface (1) to be cleaned in a plane forming an acute angle with the surface (6) not yet acted upon by the high pressure jet (4).

2. Process as defined in claim 1, characterized in that the angle of the plane in relation to the surface (1) to be cleaned is between 10° and 60°.

3. Process as defined in any one of the preceding claims, characterized in that a jet (4) spread fanwise in the plane, transversely thereto yet compact, is used.

4. Device for cleaning motor vehicles as defined in the process of patent claim 1, having nozzles (3) for delivering a high pressure cleaning jet (4), characterized in that the exit axis of the nozzles (3) has a component in the direction towards areas (5) of the surface (1) to be cleaned already acted upon by the high pressure cleaning jet (4).

## Revendications

1. Procédé de nettoyage de véhicules automobiles dans lequel on applique un produit chimique de nettoyage sur la surface (1) à nettoyer et, ensuite, on projette un liquide de nettoyage sous la forme d'un jet à haute pression (4) contre la surface (1) à nettoyer et, par un déplacement relatif du véhicule automobile et du jet à haute pression (4), on balaie toute la surface à nettoyer (1) avec le jet à haute pression, caractérisé en ce qu'on projette le jet à haute pression (4) sur la surface (1) à nettoyer dans un plan qui forme un angle aigu avec la surface (6) qui n'a pas encore subi l'action du jet à haute pression (4).

2. Procédé selon la revendication 1, caractérisé en ce que l'angle que le plan forme avec la surface (1) à nettoyer est d'entre 10° et 60°.

3. Procédé selon une des revendications précédentes, caractérisé en ce qu'on utilise un jet (4) étalé dans le plan mais compact transversalement à ce plan.

4. Dispositif pour le nettoyage de véhicules automobiles par le procédé selon la revendication 1, comprenant des buses (3) servant à émettre un jet de nettoyage à haute pression (4), caractérisé en ce que l'axe de sortie des buses (3) présente une composante dirigée vers les régions (5) de la surface (1) à nettoyer qui ont déjà subi l'action du jet de nettoyage à haute pression (4).
